# EUROPEAN PATENT APPLICATION

(11) **EP 1 304 637 A2**
(43) Date of publication of application: **23.04.2003**
(21) Application number: 02251120.8
(22) Date of filing: 19.02.2002
(51) Int. Cl.: G06F 17/60

(54) **Coupon ticket issuing system**

(30) Priority: 22.10.2001 JP 2001322950
(71) Applicant: Hitachi, Ltd., Chiyoda-ku, Tokyo (JP)
(72) Inventor: Kumomura, Akira, c/o Hitachi Ltd., Tokyo 100-8220 (JP); Iizuka, Hideyoshi, c/o Hitachi Ltd., Tokyo 100-8220 (JP); Hino, Masatoshi, c/o Hitachi Ltd., Tokyo 100-8220 (JP); Matsuki, Takeshi, c/o Hitachi Ltd., Tokyo 100-8220 (JP)
(74) Representative: Calderbank, Thomas Roger

(57) **Abstract**

A coupon information issuing system capable of issuing even a plurality of coupon information to a user who satisfied the conditions for issue. When conditions for issuing coupon information to which request for issue is designated by user are preset, a service providing server (201) issues the coupon information in accordance with the conditions for the issue. The issued coupon information is transmitted to a digital television (205) to be displayed thereon. The displayed coupon information is downloaded to a portable telephone (209) of the user for utilization.

## Description

The present invention relates generally to a coupon ticket issuing system, more particularly a method and a system for issuing and displaying coupon information supplied through a network and/or digital broadcasting.

As a technique for acquiring coupon information, it is known to make access to a server system from a portable telephone through a network to thereby download the coupon being displayed. The coupon is affixed with a bar code which is read by a barcode reader installed at a store to be subsequently sent to the server system through the network to ascertain the authenticity of the coupon, as is disclosed in JP-A-2001-256388.

However, with the conventional technique such as mentioned above, it is impossible to effectuate management concerning the issue of coupons such as issue of coupon in conformance with the desire of the user, setting of the conditions for issuing the coupon on a user-by-user basis. Further, when a user has a plurality of coupons, the user has to make decision as to effective use thereof.

An object of the present invention is to provide a coupon information issuing system which is capable of issuing coupon information in conformance with the conditions desired by user while setting the conditions for issuing the coupon information in dependence on attributes of the user.

Another object of the present invention is to provide a coupon information issuing system which allows a plurality of coupon information processed by a user to be used with enhanced efficiency.

In view of the above and other objects which will become apparent as description proceeds, there is provided a system of such arrangement that upon selection of certain coupon information by a user from advertisement-information-appended coupon information issued by a service provider, the selected advertisement-information-appended coupon information is issued when the conditions for issuing the coupon information imposed by the service provider and the conditions for receiving the coupon information as required by the user are satisfied, whereon the advertisement-information-appended coupon information as issued is sent to a receiver of the user. It is further taught by the present invention that a plurality of coupon information stored in the receiver or user terminal are sorted in accordance with validity terms and/or discount rates on a coupon-by-coupon basis.

Other objects, features and advantages of the invention will become apparent from the following description of the embodiments of the invention taken in conjunction with the accompanying drawings.

### In the drawings:

Figure 1 is a block diagram showing only schematically a general configuration of a coupon information issuing system according to an embodiment of the present invention.

Figure 2 is a view showing a system configuration of the coupon information issuing and using system according to an embodiment of the present invention.

Figure 3 is a functional block diagram showing schematically a structure of a service providing server employed in the system shown in Fig. 2.

Figure 4 is a functional block diagram showing schematically a structure of a user digital television employed in the system shown in Fig. 2.

Figure 5 is a functional block diagram showing schematically a structure of a user portable telephone employed in the system shown in Fig. 2.

Figure 6 is a flow chart for illustrating a processing procedure of storing coupon information separately from advertisement information upon reception of advertisement-information-appended coupon information by the user digital television.

Figure 7 is a view showing, by way of example, a screen image generated upon reception of the advertisement-information-appended coupon information by the user digital television.

Figure 8 is a view showing, by way of example, images of advertisement information and coupon information, respectively, which result from separation or division of advertisement-information-appended coupon information by the user digital television.

Figure 9 is a flow chart for illustrating a processing procedure the terminating issue of coupon information when the number thereof as issued exceeds a predetermined value.

Fig. 10 is a view showing a table the contents of which are set up by a service provider as the conditions for issue of coupon information.

Figure 11 is a flow chart for illustrating a processing procedure of issuing the coupon information only when the conditions for receiving the coupon information are satisfied.

Figure 12 is a table showing, by way of example, the conditions for receiving the coupon information.

Figure 13 is a flow chart illustrating a processing procedure in the case where coupon information is issued in a number permissible for the user.

Figure 14 is a flow chart for illustrating a processing procedure for issuing family-orientated coupon information only to the representative of a family without issuing in duplicate to the other member of the family.

Figure 15 is a table showing, by way of example, family information of the user.

Figure 16 is a table showing family information concerning children of the user.

Figure 17 is a flow chart for illustrating a processing procedure for updating only the items that are required to be altered upon reissue of coupon information similar to that issued once.

Figure 18 is a view showing, by way of example, coupon information tables before and after updating of conditions, respectively.

Figure 19 is a flow chat for illustrating a processing procedure for displaying with priority coupon information in an ascending order of validity terms limits.

Figure 20 is a view showing, by way of example, table referenced upon sorting of the coupon information.

Figure 21 is a view illustrating examples of the coupon information displayed on an image screen of a portable telephone after sorting the coupon information in an ascending order of final limit order of validity terms and in a descending order of discount rates, respectively.

Figure 22 is a flow chart for illustrating a processing procedure for displaying concurrently on a same image screen the coupon information which can be used in combination, if available, among a plurality of coupon information.

Figure 23 is a view showing, by way of example, screen images of coupon information which can be used in combination.

Figure 24 is a flow chart for illustrating a processing procedure for displaying coupon information until the remaining number of times coupon information can be displayed becomes zero.

Figure 25 shows a table indicating a state preceding to displaying of the coupon information and a table indicating a state succeeding to displaying of the coupon information.

Figure 26 is a view showing, by way of example, a screen image of the portable telephone in which remaining number of the coupon information is indicated.

Figure 27 is a flow chart for illustrating a processing procedure for displaying repetitionally the coupon information any desired times until the validity term has become invalid.

Figure 28 is a flow chart for illustrating a processing procedure for displaying alternately the coupon information and the ID information on an image screen of the portable telephone.

Figure 29 is a table showing ID information of the user.

Figure 30 is a view illustrating examples of screen images of the portable telephone on the presumption that the coupon information is displayed as a front image with the ID information being displayed as a second image.

Figure 31 is a flow chart for illustrating a processing procedure for displaying alternately the advertisement information and the coupon information on an image screen of the portable telephone.

Figure 32 is a view illustrating examples of screen images of the portable telephone on the presumption that the advertisement information is displayed as a front image with the coupon information being displayed as a second image.

The present invention will be described in detail in conjunction with what is presently considered as preferred or typical embodiments thereof by reference to the drawings.

### Embodiment 1

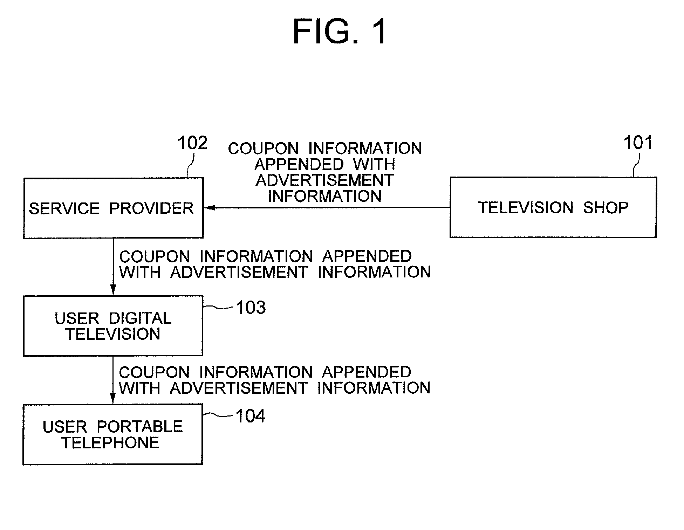

Figure 1 is a block diagram showing generally and schematically a configuration of a coupon information issuing system according to an exemplary embodiment of the present invention. Referring to the figure, a television shop 101 may be, for example, an enterprise which is in charge of issuing advertisement information appended with coupon information. Hereinafter, this information will be referred to as the advertisement-information-appended coupon information only for the convenience of description. It should however be appreciated that the same may equally be termed the coupon-information-appended advertisement information. The advertisement-information-appended coupon information as issued is sent to a service provider 102. The service provider 102 may be, for example, a broadcasting station which broadcasts the advertisement-information-appended coupon information received from the television shop 101 to a user digital television receiver 103 designed for receiving the advertisement-information-appended coupon information from the service provider 102 by making use of the television broadcast receiving function. In the user digital television 103, the advertisement information and the coupon information are separated from each other and stored individually. The coupon information received by the digital television 103 may be transferred to a user portable telephone 104 by radio. The portable telephone 104 is one sort of terminal apparatus possessed by the user.

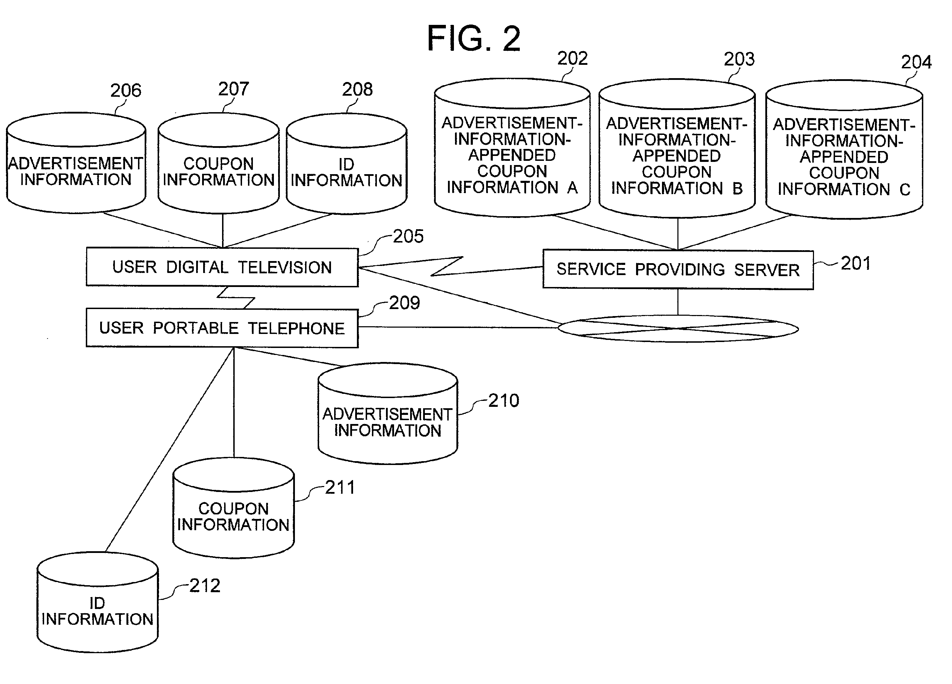

Figure 2 is a view showing a system configuration of a coupon information issuing and using system according to an embodiment of the present invention. Connected to the service providing server designated by numeral 201 in this figure are databases 202, 203 and 204 in which advertisement-information-appended coupon information A, advertisement-information-appended coupon information B and advertisement-information-appended coupon information C which have been presented by a plurality of enterprises are separately stored, respectively. The individual coupon information databases 202, 203 and 204 may be stored in a single hard-disk drive system. The service providing server 201 is capable of performing transactions of information with a user digital television 205 through the medium of a digital broadcast network and/or a telecommunication line. It is assumed that a database 206 destined for storing the advertisement information and a database 207 destined for storing the coupon information are provided in association with the user digital television 205, wherein the advertisement-information-appended coupon information stored, for example, in the database 202 connected to the service providing server 201 and sent from the latter to the user digital television 205 is stored in the databases 206 and 207 after having been being separated into the advertisement information and the coupon information, respectively. In the case of the example illustrated in Fig. 2, the advertisement information is stored in the database 206 while the coupon information is stored in the database 207. Additionally provided in association with the user digital television 205 is a database 208 which is destined for storing ID information. It is presumed that the user digital television 205 now under consideration is capable of performing transaction of information with a user portable telephone 209 through the medium of a radio system. The user portable telephone 209 incorporates therein a database 210 for storing the advertisement information, a database 211 for storing the coupon information 211 and a database 212 for storing the ID information, similarly to the databases provided in association with the user digital television 205. At this juncture, it should be mentioned that the ID information stored in the database 208 for the user digital television 205 differs in general from the ID information stored in the database 212 for the user portable telephone 209 and that these ID information can not be rewritten by the user. Ordinarily, each of the first mentioned ID information stored or contained in the database 208 is composed of a combination of a user code and a membership ID number for discriminative identification of the user registered in the digital television shop system and user's attribute information, whereas the second mentioned ID information stored in the database 212 for the user portable telephone 209 is constituted by a combination of the telephone number and the user's attribute information. Incidentally, the information contained in the databases 210 to 212 may be stored in a storage incorporated in the user portable telephone 209. Furthermore, in the system shown in Fig. 2, there may also be adopted such a system configuration in which the databases 210 to 212 are stored in respective hard disk drives which are connected to a portable telephone server installed by a portable telephone company so that the portable telephone server can read out the information from the relevant hard disk drive connected thereto to thereby send the information read out to a user portable telephone which then receives the information. At this juncture, it should also be added that in both the user digital television and the user portable telephone, the databases for storing the advertisement information and the coupon information, respectively, may be implemented in a single hard disk drive.

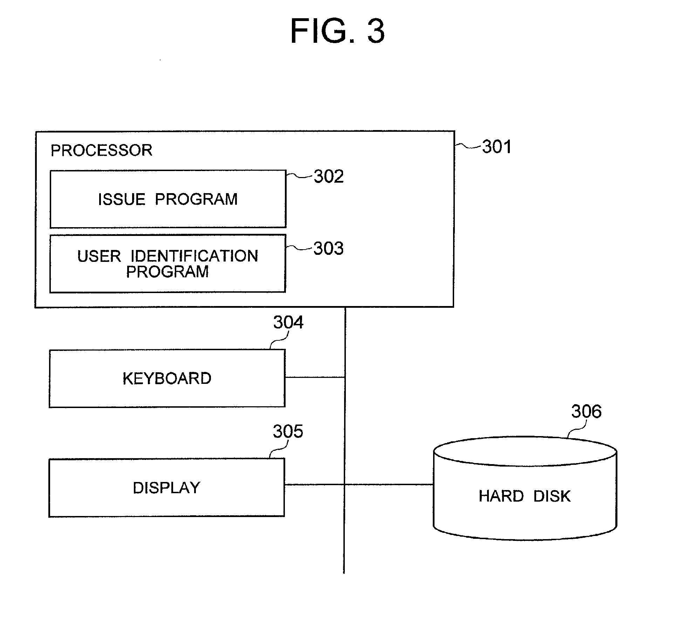

Figure 3 is a functional block diagram showing generally a structure of the service providing server 201 employed in the system shown in Fig. 2. As can be seen in the figure, the service providing server 201 includes a processor 301 on which an issue program 302 and a user identification program 303 can run. Further, a keyboard 304, a display device 305 and a hard disk 306 are connected to the processor 301 of the service providing server 201. The issue program 302 is so prepared as to determine to which of the user digital televisions and in what manner the advertisement-information-appended coupon information stored in the hard disk 306 is to be issued. On the other hand, the user identification program 303 serves for confirming whether or not the user is the justifiable or authorized person on the basis of the ID information which is stored in the user digital television and/or the user portable telephone. The keyboard 304, the display device 305 and the hard disk 306 are implemented and arranged similarly to those employed in the conventional personal computer.

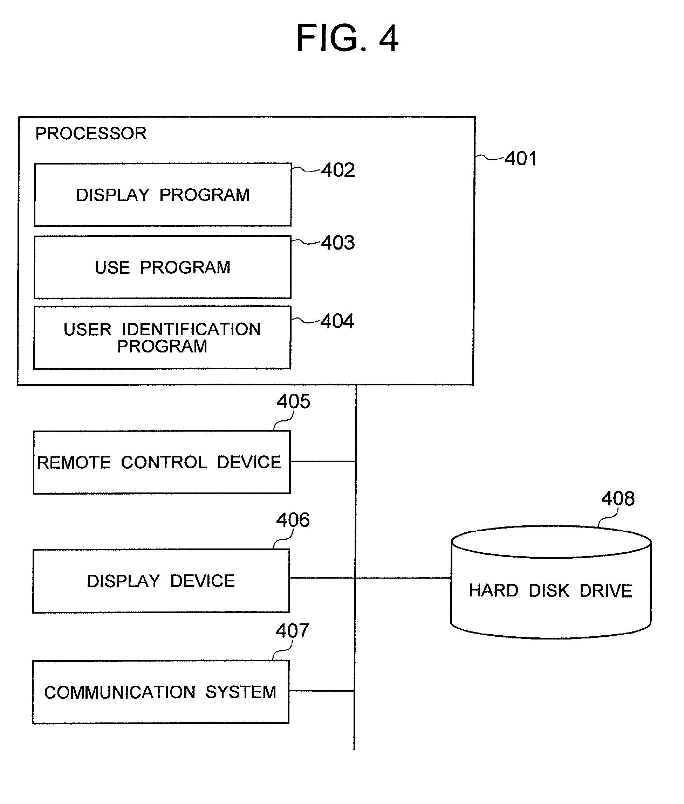

Figure 4 is a block diagram showing a structure of the user digital television 205 employed in the system shown in Fig. 2. The user digital television 205 includes a processor 401 on which a display program 402, a use program 403 and a user identification program 404 can run. Connected to this user digital television 205 are a remote control device 405, a display device 406, a communication system 407 and a hard disk drive 408. The display program 402 serves for determining in what manner the advertisement information, the coupon information and the ID information stored in the hard disk drive 408 are to be displayed on the user digital television 205. On the other hand, the use program 403 is put into activation when the user determines how to make use of the coupon information. The user identification program 404 is designed to perform user identification with a private ID number inputted by the user or a third person (third party) to thereby allow the ID information stored in the hard disk drive 408 to be accessed. The remote control device 405 may be provided as the one dedicated to the digital television. It should however be mentioned that a portable telephone may be used in place of the remote control device. Of course, the remote control device of the type which is capable of manipulating the digital television by radio may be employed. Further, the display device 406 serves as a display means for displaying the whole coupon information as a single screen image or alternatively in division, as the case may be. The communication system 407 serves as a transmitting means and a receiving means for performing transaction of the information with the service providing server 201 and the user portable telephone 209. The communication system 407 may be realized with two separate modules, i.e., a communication module dedicated for the communication with the service providing server 201 and a communication module dedicated for the communication with the user portable telephone 209, respectively. As the hard disk drive 408, there may be employed a hard disk, an IC card or the like whose contents can not ordinarily be rewritten freely by the user and a memory card or the like whose contents can freely be rewritten by the user.

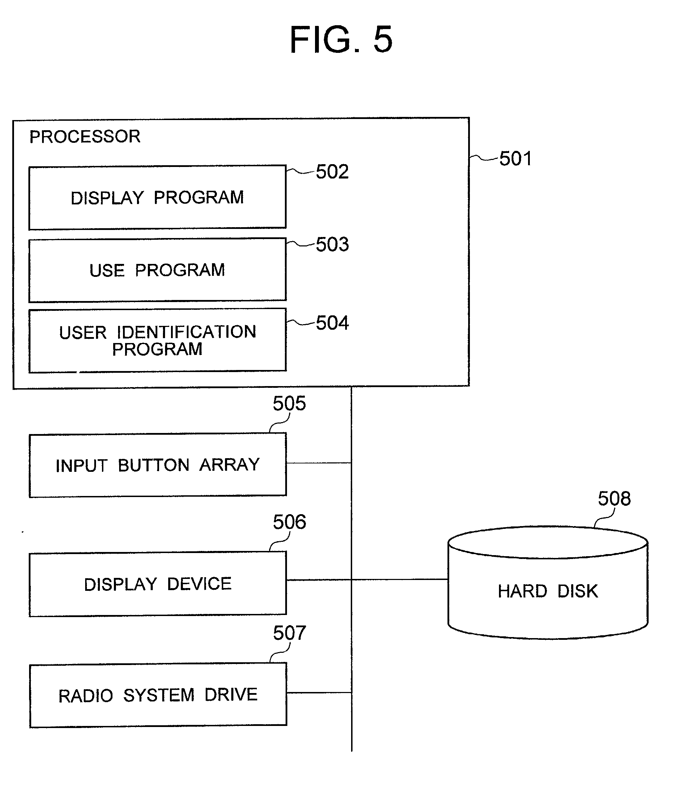

Figure 5 is a functional block diagram showing schematically a structure of the user portable telephone 209 employed in the system shown in Fig. 2. The user portable telephone 209 includes a processor 501 on which a display program 502, a use program 503 and a user identification program 504 can run. Connected to the user portable telephone are an input button array 505, a display device 506, a radio system 507 and a hard disk drive 508. The display program 502, the use program 503 and the user identification program 504 are substantially similar to those stored in the processor 401 of the user digital television described previously by reference to Fig. 4. The input button array 505 is provided for manipulating the portable telephone. The display device 506 is so designed as to display a screen image by dividing it into a front image and a back image so that they can be displayed alternately with each other. The radio system 507 is used for performing transaction of the information with the user digital television by radio. As the hard disk drive 508, there may be mentioned a hard disk or the like whose contents or records can not ordinarily be rewritten freely by the user and a memory card or the like whose contents can freely be rewritten by the user.

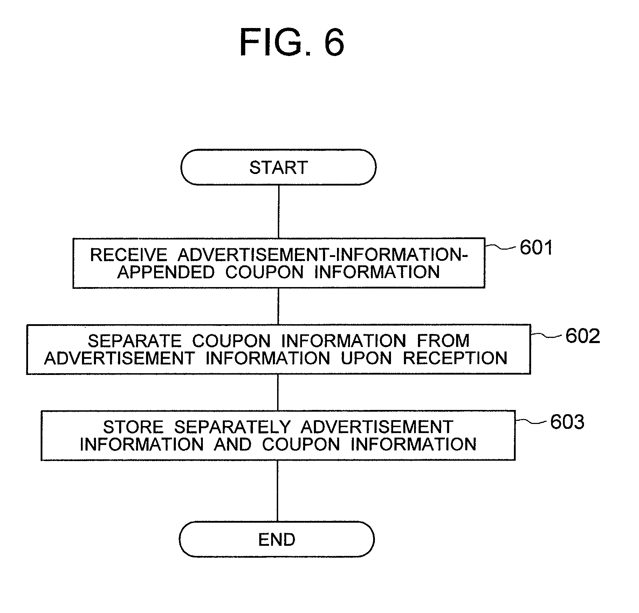

Next, referring to Figs. 6 to 8, description will be made of a processing for storing the coupon information separately from the advertisement information upon reception of the advertisement-information-appended coupon information from the service providing server 201 by the user digital television 205.

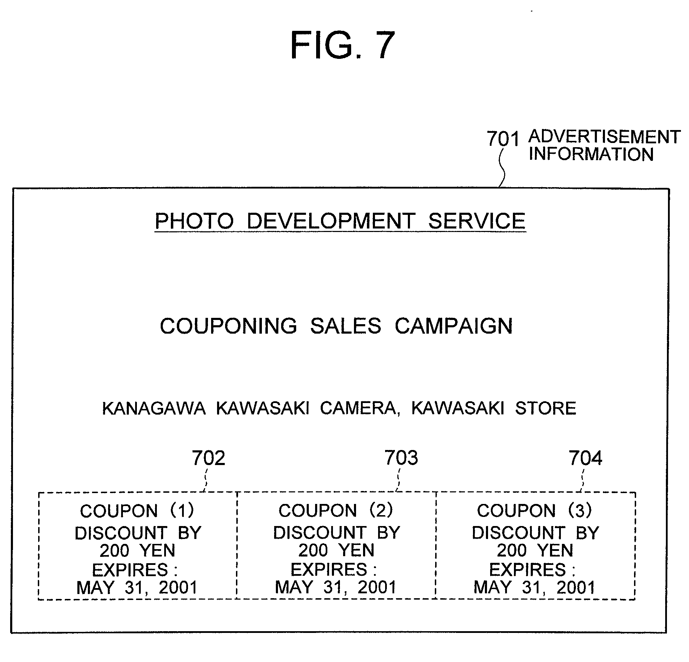

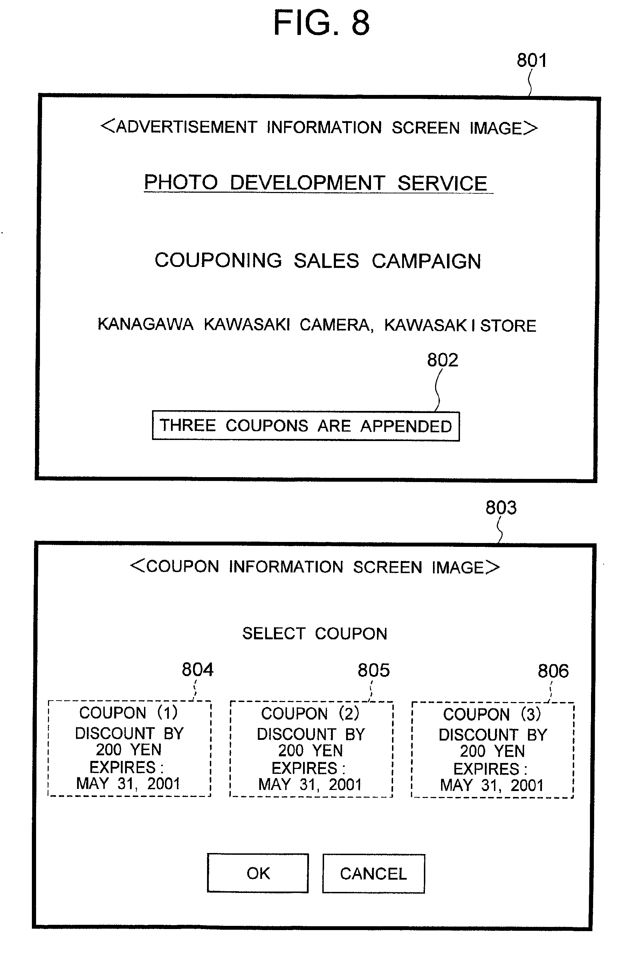

Figure 6 is a flow chart for illustrating a processing procedure for storing the coupon information after separation thereof from the advertisement information. At first, the user digital television 205 receives the advertisement-information-appended coupon information from the service providing server 201 (step 601). The received image will then be, for example, such as illustrated in Fig. 7. As can be seen in this figure, three pieces of coupon information are contained in the advertisement information 701. They are coupon information (1) 702, coupon information (2) 703 and coupon information (3) 704. Subsequently, the coupon information is separated from the advertisement information as received (step 602). The images resulting from the separation will be such as illustrated in Fig. 8. As can be seen, the advertisement information image 801 is affixed or appended with a comment 802 messaging that three coupons are appended. On the other hand, the coupon information image 803 contains three pieces of coupon information, i.e., coupon information (1) 804, coupon information (2) 805 and coupon information (3) 806. Subsequently, the advertisement information and the coupon information separated from each other are stored in the hard disks 206 and 207, respectively, which are provided in association with the user digital television 205 (step 603 in Fig. 6).

By storing the coupon information separately from the advertisement information upon reception of the advertisement-information-appended coupon information in the manner described above, it is possible to display effectively only the advertisement information on the digital television while storing only the coupon information in the portable telephone for utilization thereof with high efficiency.

Although the foregoing description has been directed to the coupon information appended with or to the advertisement information, it should be appreciated that the teachings of the present invention server can equally be applied to the issue or handling of the coupon information which is not appended with any advertisement information.

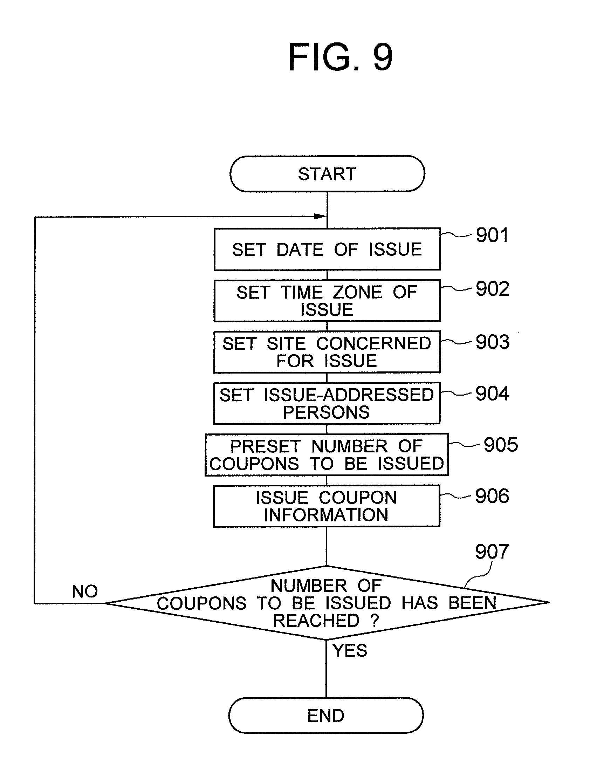

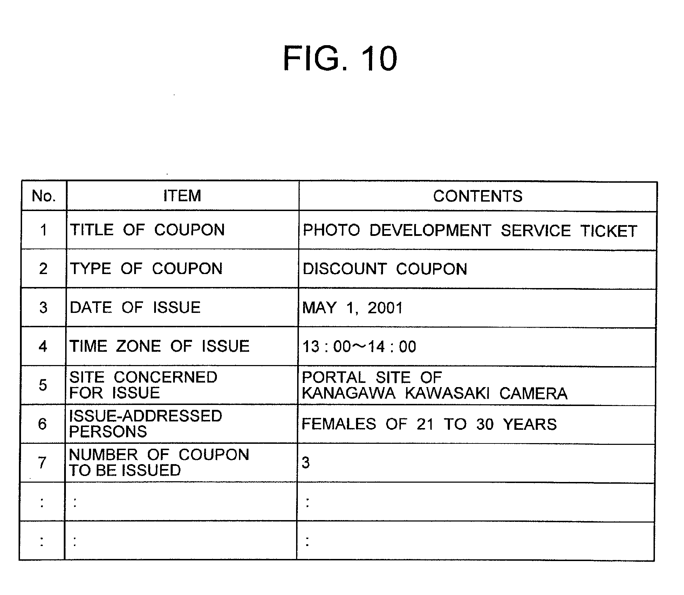

Next, referring to Figs. 9 and 10, description will be made of a processing procedure in the case where the service provider sets previously date of issue, time zone of issue, site concerned for issue, issue-addressed persons and the number of issues and where the issue of the coupons is terminated when the number of the coupons issued exceeds a predetermined value.

Figure 9 is a flow chart for illustrating processing procedure for terminating the issue of the coupon information when the number of the coupon issued exceeds a predetermined value. At first, the service provider sets the date of issue, the time zone of issue, the site concerned for issue, the issue-addressed persons and the number of issues (step 901 to step 905). The contents resulting from the setup mentioned above will be, for example, such as illustrated in Fig. 10. Subsequently, the coupon information is issued on the basis of the contents determined as mentioned above (step 906), whereon decision is made as to whether or not the predetermined number of coupons to be issued has been reached (step 907). When the decision step 907 results in affirmation or "YES" (indicating that the predetermined number of the coupons to be issued has been reached), then the issue processing comes to an end.

In this manner, the service provider can preset the date of issue, the time zone of issue, the site concerned for issue, the issue-addressed persons and the number of coupons to be issued, whereby issue of the coupons can be terminated when the number thereof has reached a preset value.

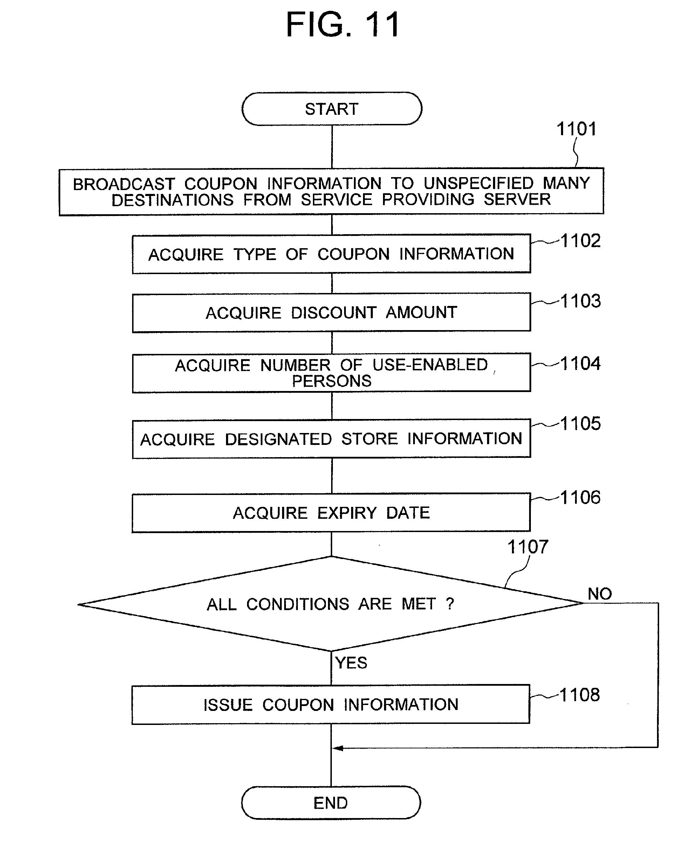

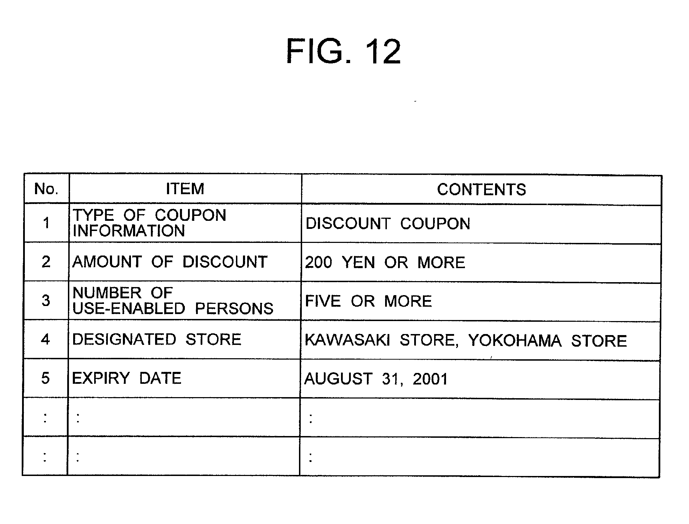

Next, referring to Figs. 11 and 12, description will be made of a processing procedure for issuing the coupon information in the case where the service provider broadcasts coupon information to many and unspecified destinations and where the coupon information is issued only when the conditions for enabling reception of the coupon information preset by the user in advance are satisfied.

Figure 11 is a flow chart for illustrating a processing procedure to this end. At first, the service providing server broadcasts the coupon information to many and unspecified digital televisions (step 1101). In succession, the digital television acquires the coupon information receiving conditions such as the type or species of the coupon information, discount amount, number of use-enabled persons, designated store, term of validity, etc. which are stored in the portable telephone, having been set by the user in advance (step 1102 to step 1106). The conditions for reception of the coupon information as preset by the user may be such as illustrated in Fig. 12. As can be seen in this figure, there may be set, by way of example, such reception enabling conditions that the type of the coupon information is a discount coupon, the discount amount is not smaller than 200 yen, the number of use-enabled persons is at least five and so forth. Subsequently, decision is made on the side of the digital television as to whether or not the coupon information broadcast satisfies all the conditions mentioned above (step 1107). In the case where the conditions concerned are met, i.e., when the decision step 1107 results in "YES", the coupon information is issued (step 1108).
If otherwise, i.e., when the step 1107 results in negation "NO", no coupon information is issued.

In this manner, even in the case where the service provider broadcasts the coupon information to many and unspecified destinations, the issue of the coupon information is enabled only when the conditions preset by the user for the reception of the coupon information are met. In other words, the user can refuse reception of unwanted coupon information.

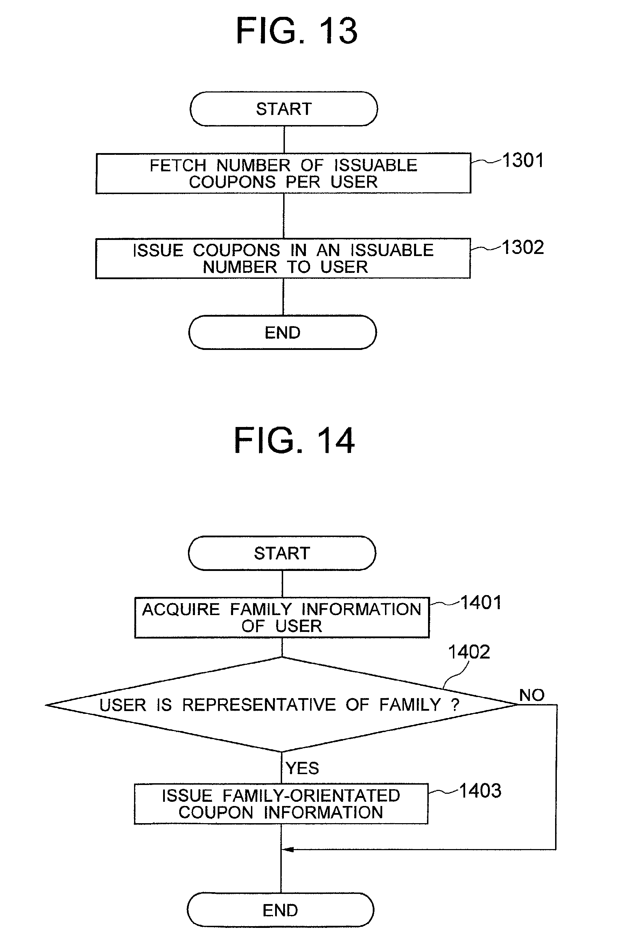

Next, by referring to Fig. 13, description will be made of a processing procedure in the case where the service providing server acquires information concerning the number of coupons which can be issued for one user to thereby issue the coupons in an issuable number.

At first, the service providing server acquires the number of coupons which the service provider can determine for one user on the basis of the ID information stored in the digital television or the portable telephone (step 1301). Subsequently, an issuable number of the coupons are sent to the user (step 1302). The coupon information sent in this case can be received by either the digital television or the portable telephone.

In this way, because of possibility of fetching or knowing the issuable number for one user, a proper number of issuable coupons can be issued to the user.

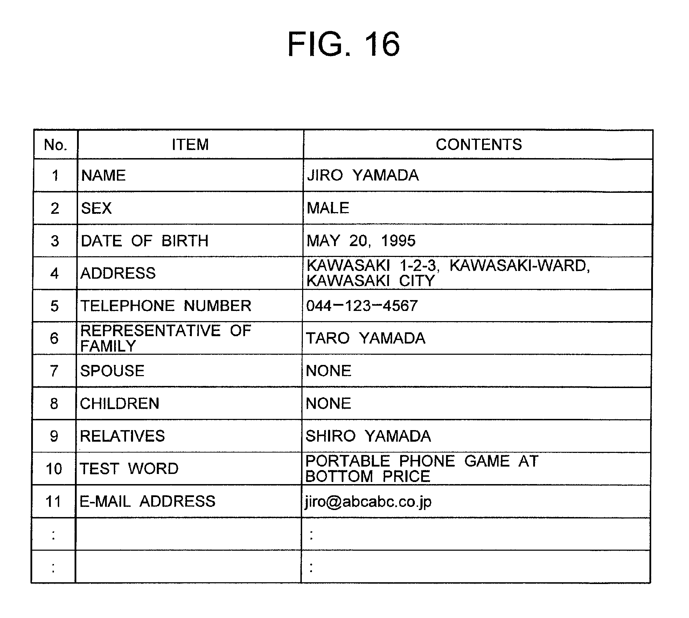

Next, referring to Figs. 14 to 16, description will be directed to a processing for issuing family-orientated coupon information only to the representative of a family without issuing in duplicate to the other members of the family on the condition that the representative of the family is the user.

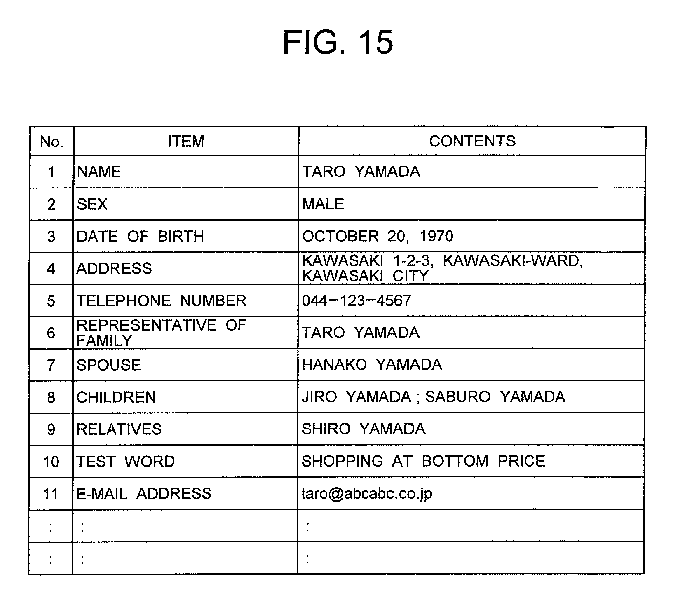

Figure 14 is a flow chart for illustrating a processing procedure to this end. Referring to the figure, the service providing server first acquires the information of the family of a user from the ID information stored in the digital television or portable telephone (step 1401). The information of the family of the user may be, for example, such as illustrated in Fig. 15. In succession, decision is made as to whether or not the user is the representative of the family (step 1402). If so, the family-orientated coupon information is sent only to the portable telephone owned by the representative (step 1403). By contrast, in the case where the information of family of a child who is registered as the user has been received and when it is ascertained that the child is not the representative of his or her family, no coupon information is issued to that child. The coupon information may be transmitted directly to the portable telephone of the representative. Alternatively, the coupon information may once be sent to the digital television, whereon the coupon information can be transmitted to the portable telephone of the representative from the digital television.

In this manner, by setting the representative of the family as the condition for receiving the coupon information, it is possible to issue the coupon information only to the representative of the family. A child (e.g. person under age) who constitutes a member of a family is not allowed to receive the family-orientated coupon information unless the child is the representative of his or her family.

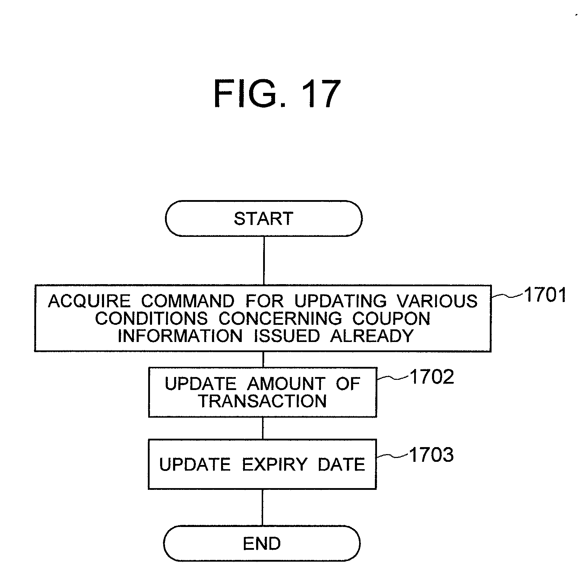

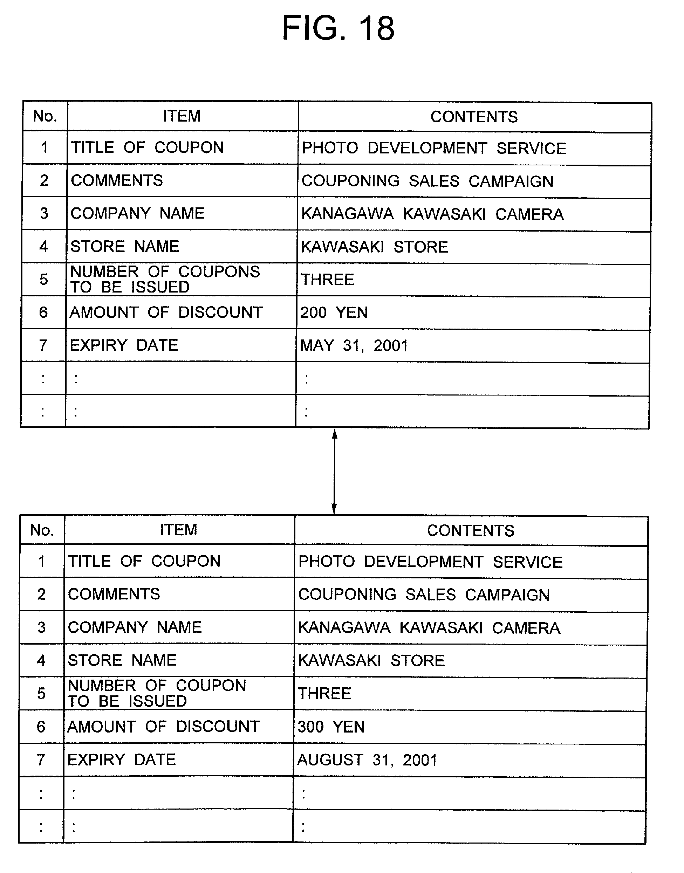

Next, referring to Figs. 17 and 18, description will be made of a processing for updating only the item such as discount amount, validity term or the like required to be altered upon reissue of coupon information similar to that issued once.

Figure 17 is a flow chart for illustrating a processing flow. At first, the digital television receives from the service provider an update command for various conditions concerning the coupon information issued already (step 1701). Subsequently, on the basis of the update command as received, the discount amount and the validity term stored in the hard disk are updated (steps 1702 to 1703). Examples of the coupon information before and after the conditions updating are illustrated in the form of tables in Fig. 18, wherein the top table shows the items before the conditions updating while the bottom table shows the same after updating of the conditions.

In this manner, in the case where coupon information similar to the issued one is reissued, it is possible to update only the items required to be altered or changed.

### Embodiment 2

A second embodiment of the present invention is directed to techniques for displaying coupon information as issued. The system configuration adopted in implementing the instant embodiment of the invention is similar to that described hereinbefore by reference to Fig. 2. Besides, functional block diagrams for the service providing server 201, the user digital television 205 and the user portable telephone 209 are similar to those shown in Figs. 3, 4 and 5, respectively.

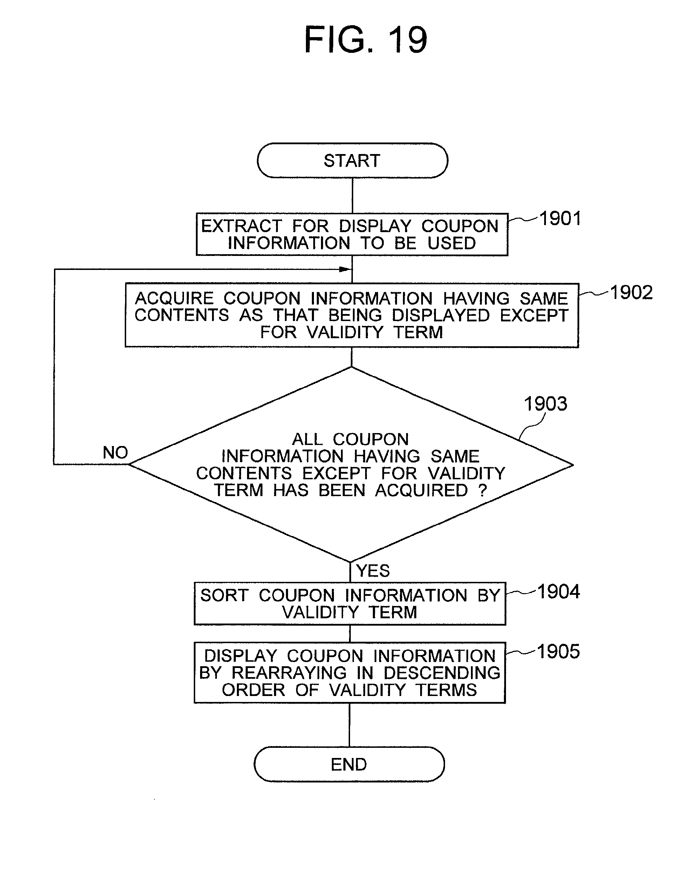

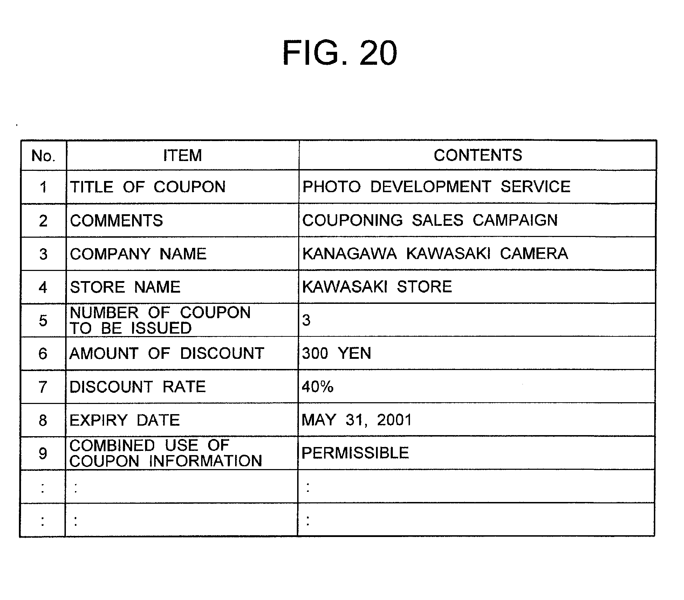

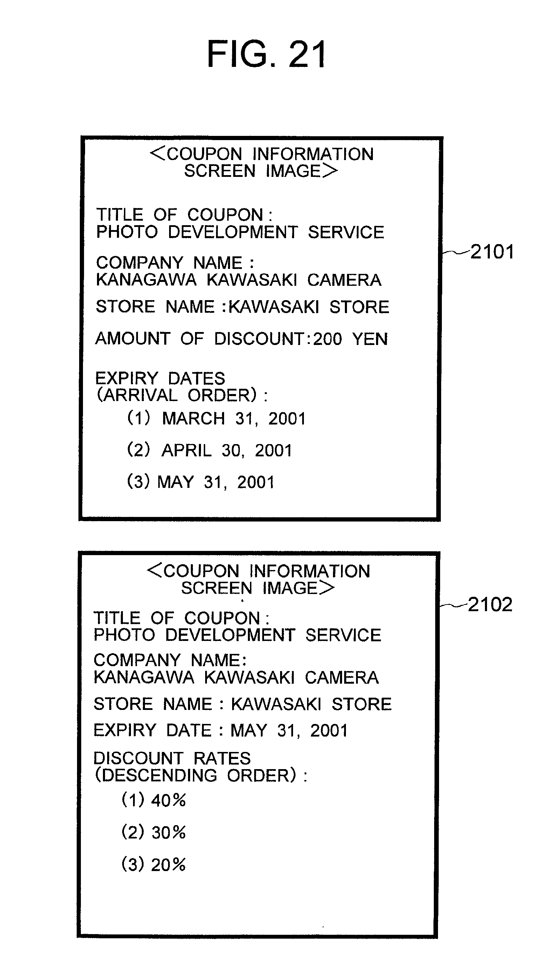

In the first place, referring to Figs. 19 to 21, description will be directed to a processing procedure for displaying with priority the coupon information in the sequential order of the validity terms. Figure 19 shows a processing flow to this end. At first, the coupon information selected by a user through input manipulation on the user portable telephone 209 is extracted from the database stored in the user portable telephone to be thereby displayed (step 1901). Subsequently, coupon information whose contents are same as the coupon information being displayed except for the validity term is acquired (step 1902). An example of the relevant coupon information is illustrated in the form of table in Fig. 20. In the case of the example now under consideration, the coupon information which is same as the displayed one with regards to the title of the coupon information, comment, company name, store name, number of coupons to be issued, discount amount and discount rate is extracted. In a step 1903, decision is made as to whether all the same coupon information except for the validity terms has been acquired. If so (i.e., when the decision step 1903 results in affirmation "YES"), the coupon information are sorted in accordance with the validity term (step 1904), whereon the coupon information is rearrayed in the descending order of the validity terms to be displayed (step 1905). An example of the coupon information displayed on a same screen of a portable telephone is illustrated in Fig. 21. As can be seen in the figure, three pieces of coupon information are displayed on a coupon information screen 2101 in the order of final limits of the validity terms.

In this manner, by displaying the coupon information in the order of the final limits of the validity terms, a plurality of coupon information as acquired whose contents are same except for the validity term can be made use of effectively in view of the validity terms.

At this juncture, it should be mentioned that the validity term mentioned above can be replaced by the discount rate through similar processing. In other words, acquisition and sorting of the acquired coupon information are carried out with the discount rate being used as the key instead of the validity term. A result of such processing is illustrated in Fig. 21 in the form of a screen image 2102.

In conjunction with the display of the coupon information in the descending order of the discount rates, it is conceivable that there exist a plurality of coupon information whose discount rates are same.
In that case, the coupon information may be displayed with priority on the validity terms in the order of the expiry dates of the coupon information in addition to the descending order of the discount rates by combining appropriately the relevant keys.

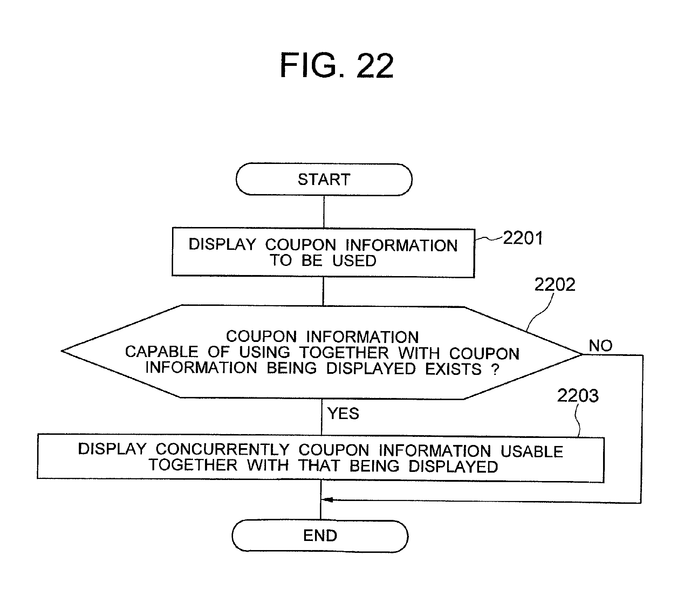

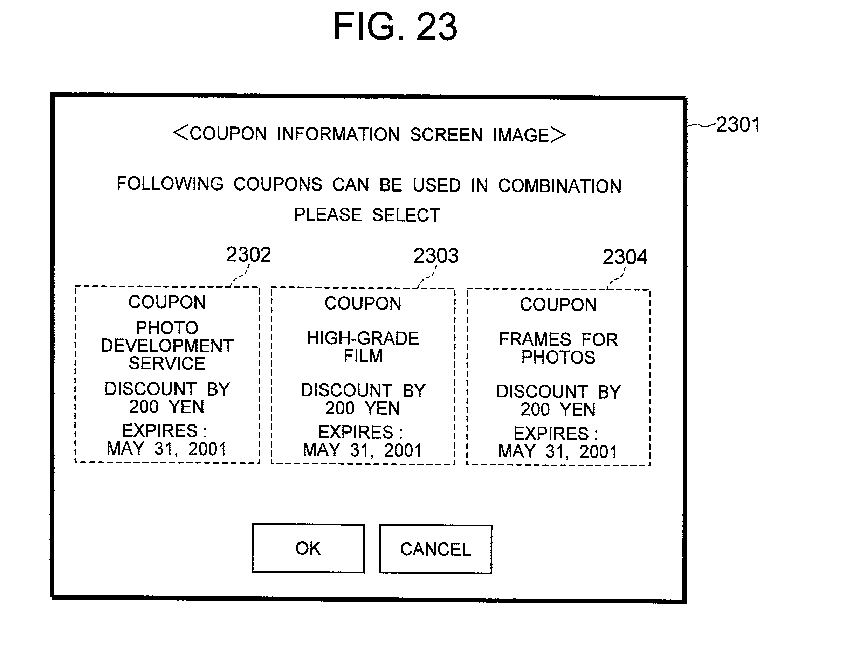

Next, referring to Figs. 22 and 23, description will be made of a processing procedure for displaying on a same image screen the coupon information which can be used in combination, if available, among a plurality of coupon information.

Figure 22 is a flow chart illustrating a processing procedure to this end. At first, the coupon information selected by a user through input manipulation on the user portable telephone 209 is extracted from the database stored in the user portable telephone to be thereby displayed (step 2201), whereon search is performed for determining whether or not there exist the coupon information which can be used in combination with the coupon information being displayed (step 2202). For deciding the possibility of the combination use, the table shown in Fig. 20 is looked up. More specifically, in the case of the illustrated example, the coupon information noted with "permissible" (see Fig. 20, ninth item from the top) is the coupon information which can be used in combination. Subsequently, the coupon information which can be used together with the coupon information being displayed, if it exists, is acquired to be thereby displayed concurrently with the coupon information being already displayed (step 2203). An example of such concurrent display of the usable coupon information on the image screen of the user portable telephone 209 is illustrated in Fig. 23. More specifically, illustrated in Fig. 23 are two pieces coupon information 2303 and 2304 displayed concurrently with the coupon information 2302 displayed at first on the display screen of the user portable telephone 209. At this juncture, it goes without saying that for the user who is viewing the user digital television 205 for the transaction purpose, the coupon information which can be used in combination may be displayed concurrently on the screen of the display 406 of the user digital television 205.

In this way, by extracting the coupon information permissible for the combinatory use from a plurality of coupon information, the coupon information can be utilized very effectively.

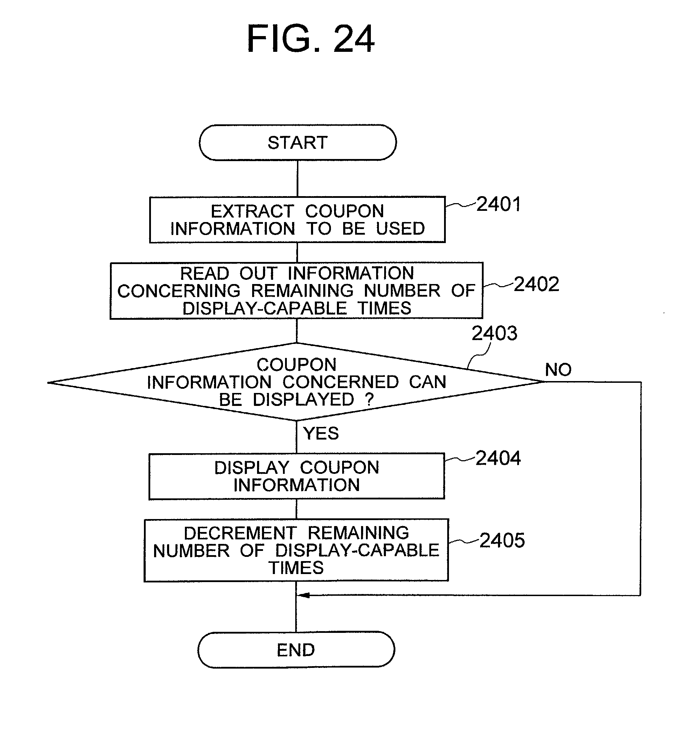

Next, referring to Figs. 24 to 26, description will be made of a processing procedure for displaying the coupon information until the remaining number of times for enabling the display of the coupon information becomes zero.

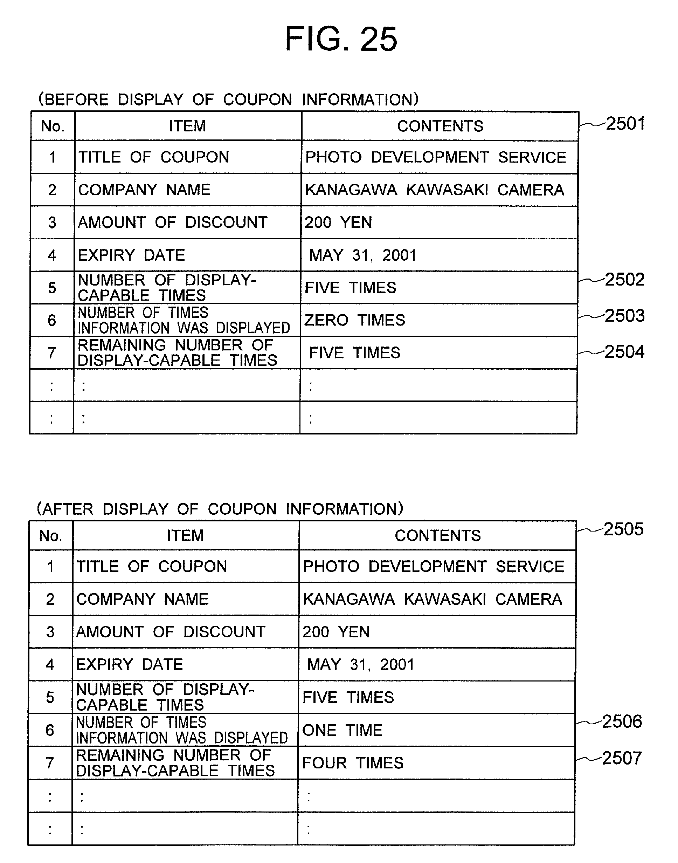

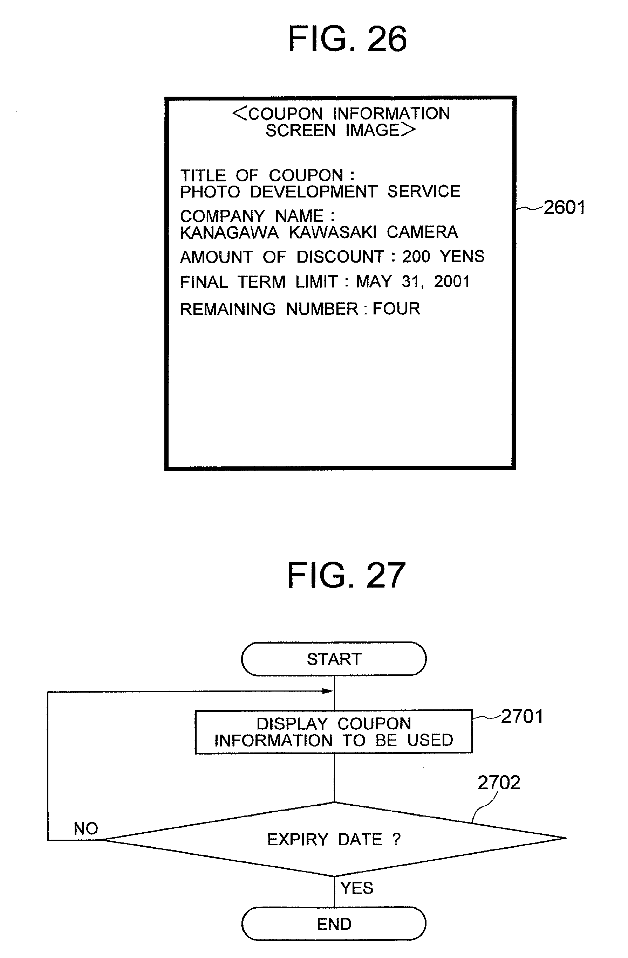

Figure 24 is a flow chart for illustrating a processing procedure to this end. At first, the coupon information selected by a user through input manipulation of the user portable telephone 209 is extracted from the database stored in the user portable telephone to be thereby displayed (step 2401). Subsequently, information concerning the number of display capable times (i.e., the number of times the coupon information can be displayed) is read out from the hard disk incorporated in the digital television or the portable telephone (step 2402), whereon decision is made as to whether or not the coupon information selected by the user can be displayed (step 2403). When the decision step 2403 results in affirmation "YES", then the coupon information selected by the user is displayed on the screen of the portable telephone (step 2404), and the number of display is incremented by one "+1" with the remaining number of display-capable times is decremented by one "-1" (step 2405). At this juncture, it should be mentioned that the number of display-capable times and the remaining number of display-capable times are set in advance as typified by a record 2502 in a table 2501 in the state preceding to displaying the coupon information, as shown in Fig. 25. In the case of the example concerned currently, the number of display-capable times is set to "5". In the initial state, the number of display-capable times is "0" as indicated by a record 2503 while the remaining number of display-capable times is "5" as indicated by a record 2504. In Fig. 26, there is illustrated an example of the coupon information displayed on a portable telephone image screen 2601. At this stage of display, the remaining number of times the coupon can be displayed (i.e., remaining number of display-capable times) information is "4". The contents of the table after the display of the coupon information are such as illustrated in Fig. 25. As can be seen in the figure, the number of times the information was displayed is updated to "1" as indicated by a record 2506 while the remaining number of display-capable times is updated to "4" as indicated by a record 2507. Incidentally, the information concerning the number of display-capable times can freely be set by sending a copy control signal to the digital television together with the advertisement information-appended coupon information from the service provider such as a broadcasting station, and at the same time forgery by a third person or party can effectively be prevented.

As is apparent from the above, by presetting in advance the number of time the coupon information can be displayed displaying of the coupon information beyond the preset number can positively be prevented.

Next, referring to Fig. 27, description will be made of a processing procedure for displaying repetitionally the coupon information any desired times until the term of validity has lapsed. At first, the coupon information selected for use by the user is extracted from the database to be displayed in response to the selective input manipulation of the user portable telephone 209 (step 2701), whereon decision is made as to whether or not the final limit of the validity terms as written in the coupon information table shown in Fig. 20 (step 2702) has been reached. When this decision step 2702 results in negation "NO", the coupon information is displayed again.

By managing the validity term of the coupon information in this manner, the coupon information can be displayed repetitively number of times so long as the final limit of the validity term has not been reached.

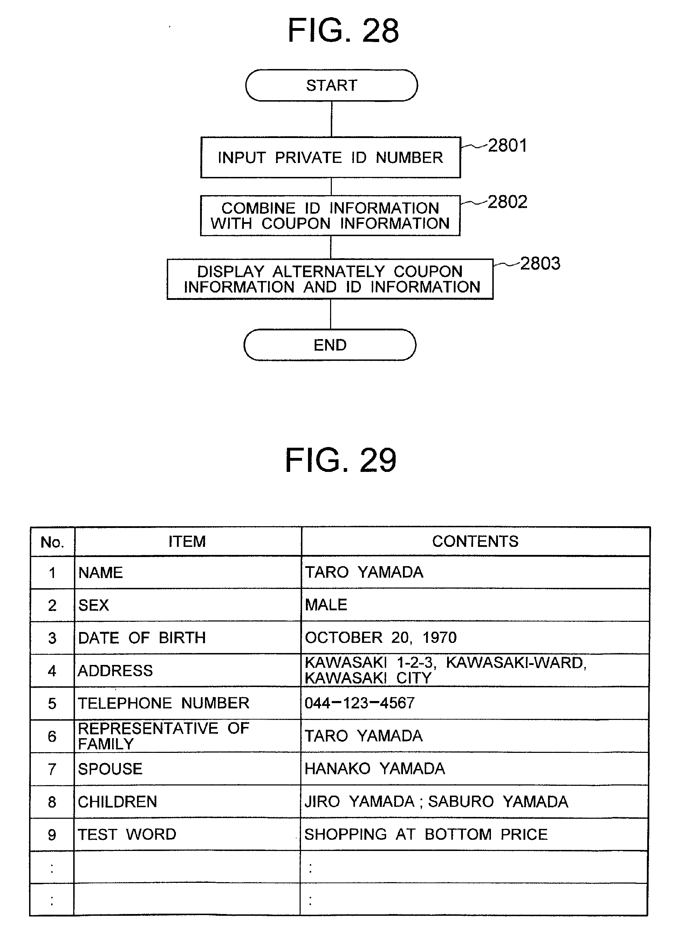

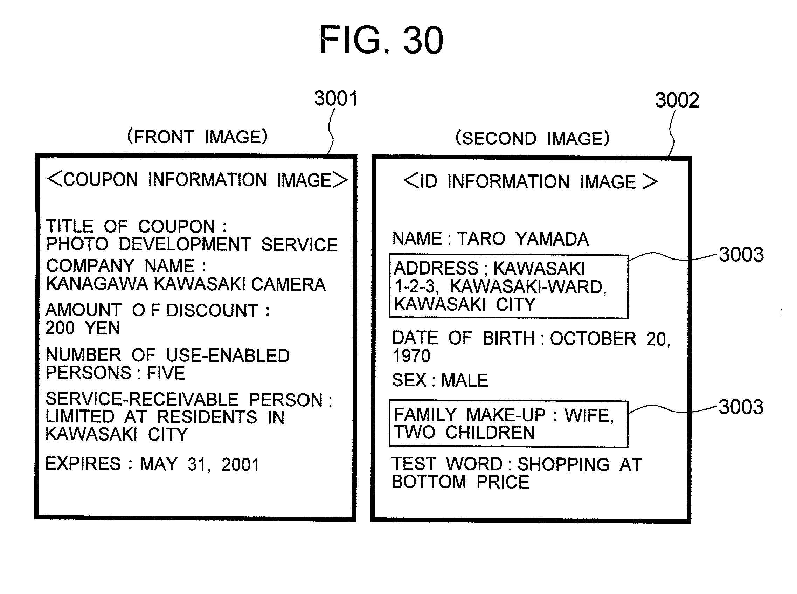

Next, a processing procedure for displaying alternate the coupon information and the ID information on the image screen in response to the input of a private ID number (password) will be described by reference to Figs. 28 to 30. Figure 28 is a flow chart for illustrating a processing procedure to this end.
As can be seen in the figure, when the user portable telephone 209 detects the inputting of the private ID number through manipulation of the input button 505 by the user after display of the selected coupon information desired for use by the user in response to the user's selection (step 2801), the coupon information being displayed is combined with the ID information (step 2802). At this juncture, it should however be added that such arrangement can equally be adopted that in this step 2802, the private ID number is firstly checked to thereby allow the user to select the coupon information desired for use, whereon the selected coupon information is displayed. The ID information table is implemented in such a form as illustration in Fig. 29. In the case of the example now concerned, attribute information of the customer such as his or her name, sex or the like is set previously in combination with the telephone number which is usually used for representing the ID information of the portable telephone. Subsequently, the coupon information and the ID information as combined are alternately displayed on the display screen 506 of the user portable telephone 209 (step 2803). An example of the display of the coupon information and the ID information on the display screen of the portable telephone is illustrated in Fig. 30 with the coupon information being displayed as a front image while the ID information is displayed as a second image. On the coupon information screen 3001, there makes appearance such descriptions that the persons for which the coupon information is issued are limited to the residents in "Kawasaki city", the number of persons capable receiving the bargain is "five" and others. As is shown in conjunction with the ID information display 3002, displayed in combination with the description of the issue-addressed persons "residents in Kawasaki City" and the number of the use-enabled person "5" are address relating description 3003 and family make-up relating description 3004 which are enclosed by frames, respectively. In this way, the information can be displayed intelligibly so that the user can easily decide whether he or she is entitled to make use of the coupon information. In this conjunction, the time interval for displaying alternately the images may be changed in dependence on whether the operator who inputs the private ID number is the user him- or herself or alternatively a third person. By way of example, when the user inputs the private ID number, the time duration for displaying the ID information may be set to a length which allows the user to ascertain the ID information on an average, while in the case where a third person such as a store clark of the store designated for use of the coupon information inputs the private ID number, the display time of the ID information is shortened and so forth. Additionally, such arrangement may also be adopted that the display position for the ID information as well as the size of the characters therefor may be varied freely in dependence on the person who is in charge of checking the ID information. Besides, for determining who inputs the user ID number, such measures may equally be adopted that the operator who is going to input the private ID number is forced to selectively input whether he or she is "authorized user" or "third person" in precedence to inputting the private ID number.

In this manner, by virtue of that the ID information can be taken out only after the user entitled to use the ID information has inputted the ID number, security of the ID information can be much enhanced. Further, by displaying alternately the coupon information and the ID information, continuous display of the user's ID information can be evaded even in the case where the third person ascertains the authenticity simultaneously viewing the screen image. In that case, it can easily be checked whether or not the user can tell the ID information without viewing the information being displayed, and thus accuracy or reliability of ascertaining the authenticity of the user can be enhanced. Additionally, concerning those items of the ID information which meet the conditions for enabling use of the coupon information, display thereof may be omitted by regarding that confirmation for these items has been completed, and the authenticity check may be performed only for the remaining items. Besides, in the case of the coupon information relating to alcoholic beverages, such conditions are usually imposed that "use of the coupon is limited to the customers older than 20 years inclusive". When it is ascertained by checking the ID information that this sort of conditions is not met, then display of the coupon information may be disabled. Alternatively, question as to the date of one's birth in Japanese calendar may be addressed to the user on the basis of the date of one's birth in A. D. which is being displayed.

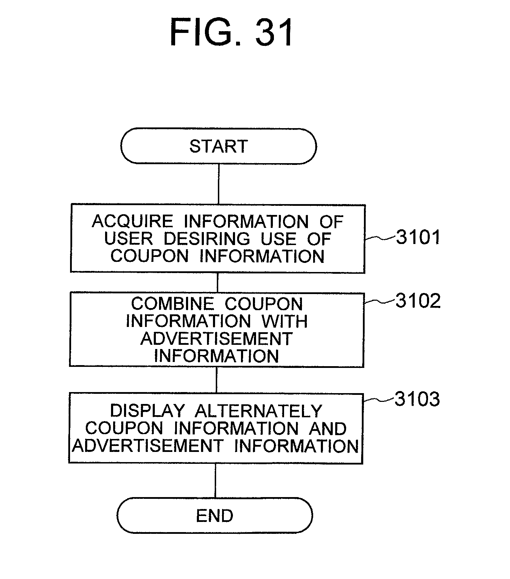

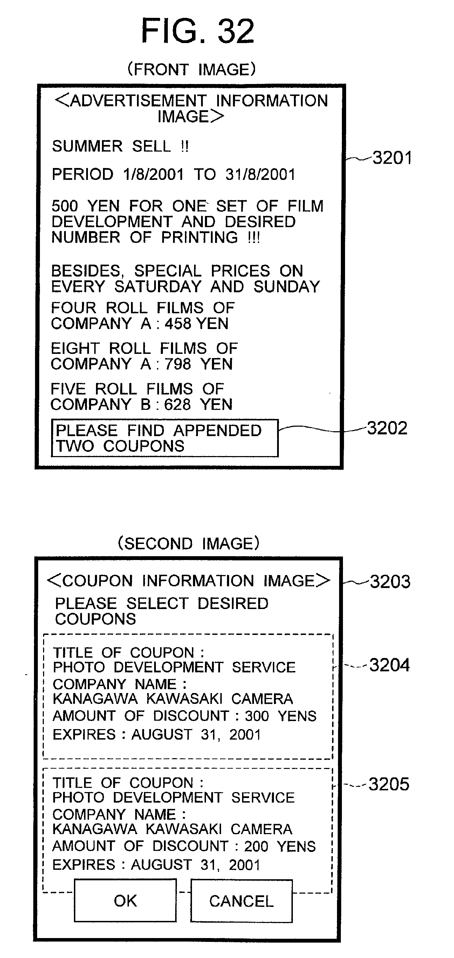

Next, a processing procedure for displaying alternately the coupon information and the advertisement information will be described by reference to Figs. 31 and 32. Figure 31 shows a processing procedure to this end. As can be seen in the figure, the user portable telephone 209 acquires at first the information to the effect that the user desires to use the coupon information, as inputted through manipulation of the input button 505 of the telephone (step 3101), whereon the coupon information is combined with the advertisement information (step 3102), and then the advertisement information and the coupon information are alternately displayed (step 3103). Examples of the advertisement information and the coupon information are illustrated in Fig. 32 on the presumption that the advertisement information is displayed as the front image with the coupon being displayed as the second image on the display screen 506. Displayed on the advertisement information screen 3201 is a message 3202 indicating that the coupon information is appended in addition to the contents of advertisement. On the other hand, coupon information 3204 and 3202 for use are displayed on the coupon information screen 3203.
In this conjunction, it should be added that when a plurality of advertisement information exist for single coupon information, displaying of plural advertisement information is more effective from the standpoint of the advertisement activities.

As will now be appreciated from the foregoing, according to the teachings of the present invention incarnated in the embodiments described above, relevant advertisement information is presented to the user every time the coupon information is to be used, which means that the opportunity of the advertisement being observed by the user can significantly be increased. Besides, when the validity term of the coupon information has expired, display or presentation of advertisement information can be disabled on the basis of the information of date stored in the portable telephone, which in turn means that necessity of storing the advertisement information generally of large data amount as in the case of the image or graphic data in the hard disk of the portable telephone or the like can be mitigated or evaded.

In practical applications where the coupon information displayed according to the teachings of the invention is actually used by the user, the coupon information and the user's ID information both stored in the portable telephone or the like are sent in combination to a store which is designated to handle the coupon. The information composed of the combined coupon information and user's ID information is transferred to the enterprise which issued that coupon information. Thus, the enterprise can grasp species of coupons as used as well as the traits of the users such as genders, generation or the like, and the enterprise can make efficient use of the acquired information for the marketing activities.

The present invention thus provides advantageous effect that by issuing the coupon information in such manner that the prescribed conditions are satisfied, issue of the coupon information to the users can be realized with enhanced efficiency.

Besides, according to the teachings of the present invention, utilization efficiency of the coupon can remarkably be increased by displaying the coupon information on the image screen of the potable telephone or the like together with important or interesting items such as the validity terms, the discount rate and the like.

It should be further understood by those skilled in the art that the foregoing description has been made on embodiments of the invention and that various changes and modifications may be made in the invention without departing from the spirit of the invention and the scope of the appended claims, as interpreted by the description and drawings.

## Claims

1. A coupon information issuing system for issuing coupon information in accordance with a user's request, comprising:
a service providing server (201) including storing means (306) for storing coupon information to be issued and issuing means (301, 302, 303) for issuing the coupon information in response to a request for issuing said coupon information in conformance with conditions for issue in the case where said conditions for issue are set previously in conjunction with the coupon information to which said issue request is directed;
a receiver (205) including receiving means (401, 407) for receiving the coupon information issued by said service providing server (201) and display means (406) for displaying said received coupon information; and
a user terminal (209) for downloading for storing therein the coupon information displayed by said receiver (205) in accordance with selection of the user.

2. A coupon information issuing system for issuing coupon information in accordance with a user's request, comprising:
a service providing server (201) including first storing means (306) for storing coupon information to be issued and transmitting means for transmitting the coupon information stored in said first storing means; and
a receiver (205) including second storing means (408) for storing conditions for issuing the coupon information desired by the user and issuing means (401) for making decision as to whether or not said coupon information transmitted from said service providing server (201) satisfies said conditions for issuing said desired coupon information, to thereby issue said coupon information transmitted from said service providing server (205) when said conditions are satisfied.

3. A coupon information issuing system according to claim 2,
said service providing server (201) is so designed as to store advertisement information which is associated with the coupon information to be transmitted to thereby transmit said coupon information and said advertisement information to said receiver (205),
wherein said coupon information and said advertisement information transmitted to said receiver are stored therein separately from each other.

4. A coupon information displaying method of displaying coupon information selected by a user, comprising the steps of:
storing a plurality of coupon information,
displaying the coupon information selected by the user from said plurality of the stored coupon information;
acquiring other coupon information containing attributes of said displayed coupon information from said plurality of the stored coupon information;
sorting a plurality of said acquired coupon information and said displayed coupon information on the basis of given attribute information; and
displaying said sorted coupon information in accordance with said attribute information.

5. A coupon information displaying method according to claim 4,
wherein said attribute information represents validity terms of said coupon information, respectively.

6. A coupon information displaying method according to claim 4,
wherein said attribute information represents discount rates of said coupon information, respectively.

7. A coupon information displaying method of displaying coupon information selected by a user, comprising the steps of:
storing a plurality of coupon information;
displaying coupon information selected by the user from said plurality of the stored coupon information;
acquiring other coupon information which can be combined with said displayed coupon information from said plurality of the stored coupon information; and
displaying a plurality of said acquired coupon information and said displayed coupon information on a same image screen.

8. A coupon information displaying method of displaying coupon information selected by a user, comprising the steps of:
storing a plurality of coupon information,
extracting coupon information selected by the user from said plurality of the stored coupon information;
reading information concerning display of said extracted coupon information from attribute information of said extracted coupon information;
deciding whether or not said extracted coupon information is capable of being displayed, and
displaying said coupon information when decision is made that said extracted coupon information can be displayed.

9. A coupon information displaying method according to claim 8,
wherein when said extracted coupon information is capable of being displayed, information concerning the display of the attribute information of said coupon information is updated.

10. A coupon information displaying method according to claim 9,
wherein the information concerning the display of the attribute information of said coupon information is information indicating a remaining number of times said coupon information can be displayed.

11. A coupon information issuing system, comprising:
a service providing server (102; 201) for receiving coupon information to be issued from a concerned enterprise (101) together with advertisement information of said concerned enterprise (101), to thereby transmit advertisement-information-appended coupon information through digital broadcasting;
a receiver (103; 205; 401) including a display (406) for displaying said advertisement-information-appended coupon information received through said digital broadcasting and storing means (408) for storing the coupon information to which request for issue is selectively inputted by user from said advertisement-information-appended coupon information being displayed; and
a user terminal (104) including a storage (508) for storing the advertisement-information-appended coupon information displayed by said receiver (103; 406) by downloading said information and a display (506) for displaying said stored advertisement-information-appended coupon information.
